# EUROPÄISCHE PATENTANMELDUNG

(11) **EP 4 060 765 A1**
(43) Veröffentlichungstag der Anmeldung: **21.09.2022**
(21) Anmeldenummer: 21162906.8
(22) Anmeldetag: 16.03.2021
(51) Int. Cl.: H01M 4/139, H01M 10/42

(54) **COMPUTERGESTÜTZTES VERFAHREN ZUR ANALYSE EINER BATTERIEZELLE, HERSTELLUNGSVERFAHREN EINES BATTERIESPEICHERS, HERSTELLUNGSEINHEIT UND COMPUTERPROGRAMMPRODUKT**

(71) Anmelder: Siemens Aktiengesellschaft, 80333 München (DE)
(72) Erfinder: Schulte, Sascha, 91315 Höchstadt (DE)

(57) **Zusammenfassung**

Die Erfindung betrifft ein computergestütztes Verfahren zur Analyse einer Batteriezelle mit mehreren Schritten. Zunächst wird eine Batteriezelle bereitgestellt. Die Batteriezelle wird anschließend mittels einer Schwingungsvorrichtung zum Schwingen angeregt. Dabei schwingt die Batteriezelle mit einem ersten Resonanzprofil. Das erste Resonanzprofil wird aufgenommen. Das erste Resonanzprofil wird dann mit einem Referenz Resonanzprofil verglichen. Ein Vergleichswert wird darauf basierend in einer Recheneinheit ermittelt. Anschließend wird ein Qualitätswert der Batteriezelle basierend auf dem Vergleichswert in der Recheneinheit ermittelt. Weiterhin betrifft die Erfindung ein Herstellungsverfahren eines Batteriespeichers mit mehreren Schritten. Zunächst wird eine Batteriezelle mittels des computergestützten Verfahrens analysiert. Anschließend wird wenigstens eine Herstellungsbedingung zum Herstellen der Batteriezelle basierend auf wenigstens zwei Qualitätswerten angepasst. Weiterhin betrifft die Erfindung eine Herstellungseinheit und ein Computerprogrammprodukt.

## Beschreibung

Die Erfindung betrifft ein computergestütztes Verfahren zur Analyse einer Batteriezelle, ein Herstellungsverfahren eines Batteriespeichers mit der Batteriezelle, eine Herstellungseinheit und ein Computerprogrammprodukt.

Lithium-Ionen-Akkumulatoren, im Folgenden auch Lithium-Ionen-Batterien genannt, werden aufgrund ihrer hohen Leistungsdichte und Energiedichte in mobilen und stationären Anwendungen als Energiespeicher eingesetzt.

Eine Lithium-Ionen-Batterie umfasst typischerweise mehrere Batteriezellen. Eine Batteriezelle, insbesondere eine Lithium-Ionen-Batteriezelle, umfasst eine Vielzahl von Materialien in unterschiedlichen Teilkomponenten. Die Teilkomponenten werden mittels verschiedener Methoden miteinander verbunden, insbesondere mittels Klemmen, Schweißen oder Wickeln.

Das Herstellen der Batteriezellen umfasst somit eine Vielzahl komplexer Schritte. Diese Schritte werden häufig diskret voneinander, also unabhängig voneinander, auf Qualitätsgrenzwerte hin überprüft.

Dennoch wird ein großer Anteil Ausschuss der Batteriezellen, also Batteriezellen mit minderer Qualität, während der Batterieproduktion erzeugt. Diese Batteriezellen mit minderer Qualität werden häufig erst nach Inbetriebnahme der Batteriezelle erkannt. Das kann nachteiligerweise dazu führen, dass eine gesamte Batterieeinheit (umfassend viele Batteriezellen) verworfen werden muss.

Somit ist es Aufgabe der vorliegenden Erfindung, ein frühzeitiges Erkennen von minderwertiger Qualität einer Batteriezelle, insbesondere vor Inbetriebnahme einer Batteriezelle, zu ermöglichen.

Die Aufgabe wird mit einem erfindungsgemäßen computergestützten Verfahren gemäß Anspruch 1, einem Herstellungsverfahren gemäß Anspruch 10, einer Herstellungseinheit gemäß Anspruch 13 und einem Computerprogrammprodukt gemäß Anspruch 14 gelöst.

Das erfindungsgemäße computergestützte Verfahren zur Analyse einer Batteriezelle umfasst mehrere Schritte. Zunächst wird eine Batteriezelle bereitgestellt. Die Batteriezelle wird anschließend mittels einer Schwingungsvorrichtung zum Schwingen angeregt. Dabei schwingt die Batteriezelle mit einem ersten Resonanzprofil. Das erste Resonanzprofil wird aufgenommen. Das erste Resonanzprofil wird dann mit einem Referenz Resonanzprofil verglichen. Ein Vergleichswert wird darauf basierend in einer Recheneinheit ermittelt. Anschließend wird ein Qualitätswert der Batteriezelle basierend auf dem Vergleichswert in der Recheneinheit ermittelt.

Weiterhin umfasst das erfindungsgemäße Herstellungsverfahren eines Batteriespeichers folgende Schritte. Zunächst wird eine Batteriezelle mittels des computergestützten Verfahrens analysiert. Anschließend wird wenigstens eine Herstellungsbedingung zum Herstellen der Batteriezelle basierend auf wenigstens zwei Qualitätswerten angepasst.

Weiterhin umfasst die erfindungsgemäße Herstellungseinheit eine Schwingungsvorrichtung und eine Recheneinheit, wobei die Recheneinheit eingerichtet ist das erfindungsgemäße computergestützte Verfahren auszuführen.

Weiterhin umfasst die Erfindung ein Computerprogrammprodukt, welches direkt in einen Speicher einer programmierbaren Recheneinheit ladbar ist, mit Programmcode-Mitteln, um das erfindungsgemäße computergestützte Verfahren in der Recheneinheit auszuführen.

Vorteilhaft ist es mit dem erfindungsgemäßen Verfahren möglich, eine Batteriezelle ohne ein physikalisches Ändern der Batteriezelle, das nachteilig selbst irreversible Schäden hervorrufen kann, zu analysieren. Basierend auf diese Analyse kann durch den Vergleich mit einem Referenzprofil, typischerweise einem Referenzprofil einer qualitativ hochwertigen Batteriezelle, eine Aussage über die Qualität der untersuchten Batteriezelle erfolgen. Somit wird vorteilhaft vermieden, dass qualitativ minderwertige Batteriezellen größere Batterieeinheiten verbaut werden und dort in Betrieb genommen werden.

In einer vorteilhaften Ausgestaltung und Weiterbildung der Erfindung wird das erste Resonanzprofil vor Inbetriebnahme der Batteriezelle in einem Batteriespeicher ermittelt. Vorteilhaft ist es insbesondere möglich, das erste Resonanzprofil vor Inbetriebnahme der Batteriezelle zu ermitteln. Somit wird vorteilhaft vermieden, dass qualitativ minderwertige Batteriezellen größere Batterieeinheiten verbaut werden und dort in Betrieb genommen werden.

In einer weiteren vorteilhaften Ausgestaltung der Erfindung erfolgt das Ermitteln des Qualitätswerts mittels einer KI-Engine.

Im Zusammenhang mit der Patentanmeldung kann unter einer KI-Engine ein Computersystem verstanden werden, welches eine "Anwendung", also eine ausführbare Datei oder auch eine Programmbibliothek, umfasst, welche mittels Künstlicher Intelligenz (KI) insbesondere Korrelationen unterschiedlicher Eingabedaten erlernt.

Die KI-Engine weist eine Ausführungsumgebung auf. Im Zusammenhang mit der Patentanmeldung kann unter einer Ausführungsumgebung eine virtuelle Maschine, beispielsweise eine Java Virtual Machine, ein Prozessor oder eine Betriebssystemumgebung verstanden werden. Die Ausführungsumgebung kann auf einer physikalischen Recheneinheit (Prozessor, Mikrocontroller, CPU, CPU Core) realisiert sein. Dabei kann die Ausführung der Anwendung in einem Lernmodus und in einem Ausführungsmodus auf derselben physikalischen Recheneinheit erfolgen. Ebenso ist es beispielsweise möglich, dass die Ausführung der Anwendung in einem Lernmodus in einer anderen physikalischen Recheneinheit erfolgt. So kann z.B. das Anlernen beispielsweise in einer speziellen Anlern-Recheneinheit erfolgen. Die Ausführung in einem Ausführungsmodus erfolgt beispielsweise in einer zweiten Recheneinheit, wobei die beim Anlernen ermittelte Gültigkeitsinformation bei der Ausführung in der Ausführungs-Recheneinheit verwendet wird. Die durch die Anlern-Recheneinheit beispielsweise ermittelte Gültigkeitsinformation wird vorzugsweise manipulationsgeschützt bereitgestellt.

Vorteilhaft ist es durch den Einsatz einer KI-Engine möglich, eine große Datenmenge einer Vielzahl von Batteriezellen miteinander zu vergleichen, und so die qualitative Bewertung und somit die Aussagesicherheit des Qualitätswerts vorteilhaft zu erhöhen.

In einer weiteren vorteilhaften Ausgestaltung und Weiterbildung der Erfindung wird zum Zwecke des Trainings der KI-Engine die Batteriezelle in den Batteriespeicher eingebracht, der Speicher in Betrieb genommen und Betriebsdaten des Batteriespeichers ermittelt. Diese Betriebsdaten werden mit dem ersten Resonanzprofil und dem Referenz-Resonanzprofil zu dem Vergleichswert zusammengeführt. Dieser Vergleichswert wird dann zum Ermitteln des Qualitätswerts des Batteriespeichers herangezogen.

In anderen Worten gehen in dieser Ausgestaltung in den Qualitätswert die Resonanzprofile und eine Bewertung der Resonanzprofile basierend auf einer Korrelation der Resonanzprofile mit den Betriebsdaten ein.

In einer weiteren vorteilhaften Ausgestaltung und Weiterbildung der Erfindung wird das Referenz-Resonanzprofil basierend auf Betriebsdaten von wenigstens zwei Batteriezellen ermittelt. Mittels der KI-Engine kann insbesondere ein Optimieren des Referenz-Resonanzprofils basierend auf einer Vielzahl von Betriebsdaten aus einer Vielzahl von Batteriezellen erfolgen.

In einer weiteren vorteilhaften Ausgestaltung und Weiterbildung der Erfindung wird die KI-Engine mittels Deep-Learning-Methoden trainiert, Qualitätsklassen für das Einteilen von wenigstens zwei Vergleichswerten zu ermitteln. Vorteilhaft ist es somit möglich eine Vielzahl von Daten für das Bewerten des Qualitätswerts, bzw. für das Einbeziehen in den Qualitätswert, heranzuziehen und dabei schnell eine Qualitätsbewertung vorzunehmen. Insbesondere kann diese Auswertung vorteilhaft ohne einen menschlichen Eingriff erfolgen.

In einer vorteilhaften Ausgestaltung und Weiterbildung der Erfindung wird als Qualitätswert ein Alterungsverhalten der Batteriezelle, eine Kapazität der Batteriezelle, und/oder ein Innenwiderstand der Batteriezelle verwendet. Der Qualitätswert wird insbesondere auf experimentell ermittelten Korrelationen zwischen den Resonanzprofil und den genannten Qualitätswerten ermittelt. Das Ermitteln dieser Korrelationen kann im Rahmen einer Kalibrierung nur einmalig erfolgen. Vorteilhaft kann der so ermittelte Qualitätswert anschließend mit Qualitätswerten, welche aus anderen Methoden bekannt sind oder ermittelt wurden, verglichen werden.

In einer weiteren vorteilhaften Ausgestaltung und Weiterbildung der Erfindung wird als Schwingungsvorrichtung eine Rüttelplatte, eine schwingende Platte, welche insbesondere eine mechanische Einklemmvorrichtung umfasst, verwendet. Vorteilhaft ist es damit möglich, die Resonanzprofile aufzunehmen, ohne die Batteriezelle negativ zu beeinträchtigen oder sogar zu schädigen.

In einer weiteren vollhaften Ausgestaltung und Weiterbildung der Erfindung wird das erste Resonanzprofil und/oder das Referenz-Resonanzprofil aufgenommen und in Messdaten umgewandelt. Vorteilhaft ermöglicht diese Aufnahme, die Schwingungen in Daten zu übersetzen und an die Recheneinheit zu übertragen.

In einer weiteren vorteilhaften Ausgestaltung und Weiterbildung der Erfindung werden die wenigstens zwei Qualitätswerte, welche für das Anpassen des Herstellungsverfahren eines Batteriespeichers herangezogen werden, mittels der KI-Engine in wenigstens zwei unterschiedlichen Qualitätsklassen eingeordnet. Vorteilhaft erfolgt das Anpassen des Herstellungsverfahrens somit basierend auf robusten Daten, weiterhin ist es möglich, eine Verhaltensänderung aufgrund insbesondere eines zeitlichen Versatzes, aufzunehmen.

In einer weiteren vollhaften Ausgestaltung und Weiterbildung der Erfindung werden als Herstellungsbedingungen Temperaturen, Lösungsmittelanteil der Slurry, also des Rohmaterials für die Elektrodenschicht und/oder der Durchmischungsgrad der Slurry angepasst.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: eine Herstellungseinheit mit einer Batteriezelle, einer Schwingungsvorrichtung und einer Recheneinheit;
- Figur 2: ein erstes Resonanzprofil und ein ReferenzResonanzprofil;
- Figur 3: ein Verfahrensschema zur Analyse einer Batteriezelle.

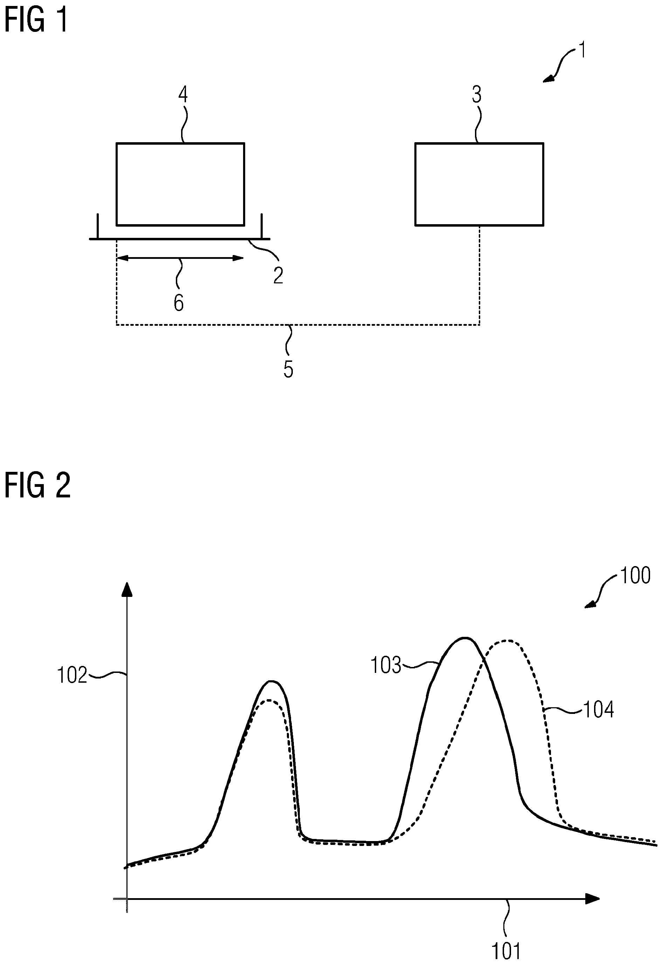

Figur 1 zeigt schematisch eine Herstellungseinheit 1 mit einer Batteriezelle 4, einer Schwingungsvorrichtung 2 und einer Recheneinheit 3. Die Recheneinheit 3 ist mit der Schwingungsvorrichtung 2 über eine Datenübertragungseinheit 5 verbunden.

Die Schwingungsvorrichtung 2 wird fest mit der Batteriezelle 4 verbunden. Die Schwingungsvorrichtung 2 wird in diesem Ausführungsbeispiel in ein seitliche Schwingung 6 versetzt. Die Amplitude, in anderen Worten die Intensität des Ausscherverhaltens, und die Frequenz der Bewegung der Schwingungsvorrichtung 2 wird derart gewählt, dass die Batterie in Schwingung versetzt wird, aber keine mechanischen Veränderungen oder sogar Beschädigungen an der Batterie auftritt. Die Frequenz 101 wird in einem vorgegebenen Bereich variiert.

Die Schwingungsresonanz 102 der Batteriezelle 4 wird aufgenommen und zusammen mit der Frequenz 101 angeregt und an die Recheneinheit 3 übertragen.

Figur 2 zeigt beispielhafte Resonanzprofile 100. Das Resonanzprofil 100 zeigt die Schwingungsresonanz 102 über der Frequenz 101. Zum einen ist ein erstes Resonanzprofil 104 der Batteriezelle 4 aufgetragen. Weiterhin ist ein Referenz-Resonanzprofil 103 aufgetragen.

Das Referenz-Resonanzprofil 103 wird typischerweise im Rahmen von vorhergehenden Messungen ermittelt. Insbesondere wird es durch ein Vermessen mittels der Schwingungsvorrichtung von Batteriezellen ermittelt, die bereits mit alternativen Qualitätsermittlungsmethoden, insbesondere Kapazitätsmessungen und/oder SOH-Methoden, als qualitativ hochwertig ausgewählt wurden.

Die Robustheit des Qualitätswerts kann insbesondere durch den Einsatz einer KI-Engine weiter verbessert werden. Es ist möglich die KI-Engine mittels Betriebsdaten von Batteriezellen zu trainieren und diese Betriebsdaten mit den Resonanzprofilen zu korrelieren.

Das erste Resonanzprofil 104, welches von einer zu testenden Batteriezelle 4 vermessen wurde, ist gegenüber dem Referenz-Resonanzprofil 103 verschoben. Basierend auf dieser Verschiebung kann ein Vergleichswert ermittelt werden. Dieser Vergleichswert kann insbesondere in Vergleich der verschobenen Maxima oder ein Vergleich der Flächen sein. Der Qualitätswert kann basierend auf dem Vergleichswert ermittelt werden. Als Qualitätswert wird eine Kapazität oder ein Innenwiderstand der Batteriezelle ermittelt. Zu diesem Zweck kann insbesondere die Batteriezelle, auf der basierend das Referenz-Resonanzprofil ermittelt wurde, herangezogen werden, um eine Korrelation der Kapazität oder des Innenwiderstands zum Vergleichswert zu ermitteln.

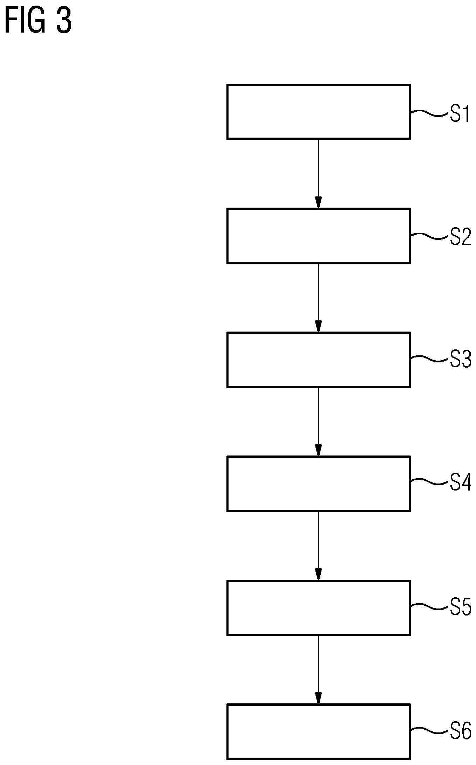

Figur 3 zeigt ein schematisches Verfahrensbild des Verfahrens zur Analyse der Batteriezelle. In einem ersten Schritt erfolgt das Bereitstellen einer Batteriezelle S1. In einem zweiten Schritt erfolgt das Anregen der Batteriezelle S2 zum Schwingen mittels einer Schwingvorrichtung, wobei die Batteriezelle mit einem ersten Resonanzprofil mechanisch schwingt. In einem dritten Schritt erfolgt das Aufnehmen des ersten Resonanzprofils S3. In einem vierten Schritt erfolgt das Vergleichen des ersten Resonanzprofils mit einem Referenz-Resonanzprofil S4. In einem fünften Schritt erfolgt das Ermitteln eines Vergleichswertes in einer Recheneinheit S5. In einem sechsten Schritt erfolgt das Ermitteln eines Qualitätswerts der Batteriezelle basierend auf dem Vergleichswert in der Recheneinheit S6.

### Bezugszeichenliste

1 Herstellungseinheit
2 Schwingungsvorrichtung
3 Recheneinheit
4 Batteriezelle
5 Datenübertragungseinheit
6 Schwingung
100 Resonanzprofil
101 Frequenz
102 Schwingungsresonanz der Batteriezelle
103 Referenz-Resonanzprofil
104 erstes Resonanzprofil
S1 Bereitstellen der Batteriezelle
S2 Anregen der Batteriezelle zum Schwingen
S3 Aufnehmen des ersten Resonanzprofils
S4 Vergleichen des ersten Resonanzprofils mit einem Referenz-Resonanzprofil
S5 Ermitteln eines Vergleichswerts
S6 Ermitteln eines Qualitätswerts

## Patentansprüche

1. Computergestütztes Verfahren zur Analyse einer Batteriezelle (4) mit mehreren Schritten:
- Bereitstellen einer Batteriezelle (4),
- Anregen der Batteriezelle (4) zum Schwingen mittels einer Schwingungsvorrichtung (2), wobei die Batteriezelle (4) mit einem ersten Resonanzprofil (104) mechanisch schwingt,
- Aufnehmen des ersten Resonanzprofils (104),
- Vergleichen des ersten Resonanzprofils (104) mit einem Referenz-Resonanzprofils (103) und Ermitteln eines Vergleichswertes in einer Recheneinheit (3),
- Ermitteln eines Qualitätswerts der Batteriezelle (4) basierend auf dem Vergleichswert in der Recheneinheit (3).

2. Computergestütztes Verfahren nach Anspruch 1, wobei das Referenz-Resonanzprofil (103) und/oder das erste Resonanzprofil (104) vor Inbetriebnahme der Batteriezelle (4) in einem Batteriespeicher ermittelt wird.

3. Computergestütztes Verfahren nach einem der vorhergehenden Ansprüche, wobei das Ermitteln des Qualitätswerts mittels einer KI-Engine als Recheneinheit erfolgt.

4. Computergestütztes Verfahren nach Anspruch 3, wobei zum Trainieren der KI-Engine die Batteriezelle (4) in den Batteriespeicher eingebracht wird, der Batteriespeicher in Betrieb genommen wird, Betriebsdaten des Batteriespeichers ermittelt werden, die Betriebsdaten mit dem ersten Resonanzprofil (104) und dem Referenz - Resonanzprofil (103) zu dem Vergleichswert zusammengeführt werden und dieser Vergleichswert zum Ermitteln des Qualitätswerts des Batteriespeichers herangezogen wird.

5. Computergestütztes Verfahren nach Anspruch 3 oder 4, wobei die KI - Engine mittels Deep-Learning-Methoden trainiert wird, Qualitätsklassen für das Einteilen von wenigstens zwei Vergleichswerten zu ermitteln.

6. Computergestütztes Verfahren nach Anspruch 5, wobei die KI-Engine trainiert wird, den Vergleichswert genau einer Qualitätsklasse für eine Bewertung der Resonanzprofile (100) zuzuordnen und die Qualitätsklasse als Qualitätswert auszugeben.

7. Computergestütztes Verfahren nach einem der vorhergehenden Ansprüche, wobei als Qualitätswert ein Alterungsverhalten, eine Kapazität und/oder ein Innenwiderstand der Batteriezelle (4) verwendet wird

8. Computergestütztes Verfahren nach einem der vorhergehenden Ansprüche, wobei als Schwingungsvorrichtung ein Rüttelplatte und/oder ein schwingende Platte mit einer Fixiervorrichtung verwendet wird.

9. Computergestütztes Verfahren nach einem der vorhergehenden Ansprüche, wobei das erste Resonanzprofil (104) und/oder das Referenz-Resonanzprofil (103) mittels aufgenommen wird.

10. Herstellungsverfahren eines Batteriespeichers mit folgenden Schritten:
- Analysieren einer Batteriezelle (4) gemäß einem computergestützten Verfahren nach einem der Ansprüche 1 bis 9,
- Anpassen wenigstens einer Herstellungsbedingung zum Herstellen der Batteriezelle (4) basierend auf wenigstens zwei Qualitätswerten
- Zusammenfassen wenigstens zweier Batteriezellen (4) zu dem Batteriespeicher.

11. Herstellungsverfahren gemäß Anspruch 10, wobei die wenigstens zwei Qualitätswerte in wenigstens zwei unterschiedlichen Qualitätsklassen eingeordnet sind. In wenigstens zwei unterschiedlichen Qualitätsklassen.

12. Herstellungsverfahren nach Anspruch 9, 10 oder 11, wobei als Herstellungsbedingungen Temperaturen, Lösungsmittelanteil der Elektrodenschicht-Paste oder der Durchmischungsgrad der Elektrodenschicht-Rohpaste angepasst werden.

13. Herstellungseinheit zum Herstellen eines Batteriespeichers umfassend:
- eine Schwingungsvorrichtung (2) und eine Recheneinheit (3) eingerichtet zum Ausführen des Verfahrens gemäß einem der Ansprüche 1 bis 9.

14. Computerprogrammprodukt, welches direkt in einen Speicher einer programmierbaren Recheneinheit ladbar ist, mit Programmcode-Mitteln, um ein Verfahren nach einem der Ansprüche 1 bis 9 auszuführen, wenn das Computerprogrammprodukt in der Recheneinheit ausgeführt wird.
